(19) Europäisches Patentamt / European Patent Office / Office européen des brevets

(11) **EP 2 637 046 B1**

(12) **EUROPEAN PATENT SPECIFICATION**

(45) Date of publication and mention
of the grant of the patent:
**10.02.2016   Bulletin 2016/06**

(51) Int Cl.:
*G01W 1/10* $^{(2006.01)}$       *F03D 7/02* $^{(2006.01)}$
*F03D 7/04* $^{(2006.01)}$       *G06F 17/00* $^{(2006.01)}$

(21) Application number: **13154918.0**

(22) Date of filing: **12.02.2013**

(54) **Method for predicting wind conditions in a wind farm**

Verfahren zur Vorhersage der Windbedingungen in einem Windpark

Procédé permettant de prédire des conditions de vent dans un parc éolien

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.03.2012   KR 20120022817**

(43) Date of publication of application:
**11.09.2013   Bulletin 2013/37**

(73) Proprietor: **Industrial Cooperation Foundation
Chonbuk National University
Jeonbuk (KR)**

(72) Inventors:
 • **Kang, Yong Cheol**
  **Jeonbuk (KR)**
 • **Kim, Yeon Hee**
  **Jeonbuk (KR)**

(74) Representative: **Regimbeau
20, rue de Chazelles
75847 Paris Cedex 17 (FR)**

(56) References cited:
EP-A2- 1 793 123      JP-A- 2004 019 583
JP-A- 2009 138 523    KR-B1- 101 093 003
US-A1- 2011 295 438

**Description**

BACKGROUND OF THE INVENTION

1. Field of the Invention

The present invention relates to a method for predicting wind conditions in a wind farm and, more particularly, to a method used to effectively operate a wind farm by accurately predicting wind conditions arriving at each wind turbine in the wind farm after a predetermined time based on the fact that the wind conditions measured by wind condition measurement devices installed outside the wind farm vary depending on a variety of variables on their way to the wind farm.

2. Description of the Related Art

A wind turbine is a device that converts kinetic energy of wind into electrical energy, and a wind farm is a place where several wind turbines are installed and rotated by natural wind to obtain energy on land or at sea.

The wind farm generates electricity using wind and thus is much affected by wind conditions. Since the electrical energy generated by the wind turbine is affected by the strength of fluctuating wind and thus cannot maintain a constant level at all times, its quality is inferior to those of conventional power generators. In order to produce electrical energy of high quality, a power generator in a power grid should reserve sufficient power so as to compensate for the increase and decrease in power output of the wind turbine. However, since the power output of the wind farm is highly variable depending on the change in wind conditions, a large amount of power should be reserved to stably operate the power grid, which as a result increases the cost of power generation. Since this problem becomes severe when a large number of wind turbines are interconnected to the power grid, a grid-code is established and enforced in many countries of the world, and the Korea's grid-code was also announced in June, 2010.

In preparation for the case when the wind disappears suddenly or blows much less, it is necessary to have sufficient reserve power such that other generators in the power grid can use the reserve power. To this end, it is necessary to turn on a fuel generator with high generation costs in advance, which causes the ineffective operation of the power grid. Accordingly, only when the power output of the wind farm after a predetermined time can be accurately predicted, it is possible to reduce the amount of the reserve by the other operating generation units, and thus effectively operate the power grid.

As a prior art, Korean Patent No. 10-1093003 discloses a technique for controlling a wind farm when the wind speed varies abruptly. This technique ensures reliability of the entire power grid by controlling the ramp rate of the wind farm based on a change in the wind speed. However, this is based on the assumption that the wind conditions measured outside the wind farm arrive at the wind farm as they are, and thus it is necessary to consider a situation where the wind conditions vary.

Document JP2009138523A concerns estimating output of wind power generation.

SUMMARY OF THE INVENTION

The present invention has been made in an effort to solve the above-described problems associated with the prior art, and an object of the present invention is to accurately predict wind conditions of each wind turbine in a wind farm after a predetermined time.

Another object of the present invention is to stably operate a wind farm and further effectively operate the entire power grid by accurately predicting wind conditions after a predetermined time to minimize the fluctuation in power output of the wind farm due to a change in the wind conditions.

Still another object of the present invention is to effectively control and operate a wind farm by predicting the power output of the wind farm, reducing the rate of fluctuation of the wind farm, and improving the power factor based on predicted wind condition information.

To achieve the above-described objects, the present invention provides a method for predicting wind conditions in a wind farm, the method comprising the steps of: (a) measuring wind conditions including a wind speed and a wind direction by means of wind condition measurement devices disposed outside the wind farm; (b) compensating for an error occurring while the wind conditions measured by the wind condition measurement devices are reaching the wind farm; and (c) calculating wind conditions in each wind turbine in the wind farm after a predetermined time based on the wind conditions whose error is compensated in step (b), wherein step (b) comprises the steps of: (b-1) compensating for the error based on topographic conditions between the wind condition measurement devices and the wind farm; and (b-2) compensating for the error based on conditions of a form in which the wind turbines are disposed in the wind farm and based on the influence of a slipstream created by a blade of one of the wind turbines on other wind turbines.

Moreover, the method for predicting wind conditions in a wind farm in accordance with an exemplary embodiment of the present invention further comprises, after step (b-1), the step of (b-3) compensating for the error based on a turbulence model obtained by modeling the formation of turbulence due to the movement of wind.

Meanwhile, the method for predicting wind conditions in a wind farm in accordance with another exemplary embodiment of the present invention further comprises, after step (b-1), the step of (b-4) compensating for the error based on atmospheric conditions between the wind condition measurement devices and the wind farm, and the wind condition measurement devices are disposed in multiple layers outside the wind farm.

BRIEF DESCRIPTION OF THE DRAWINGS

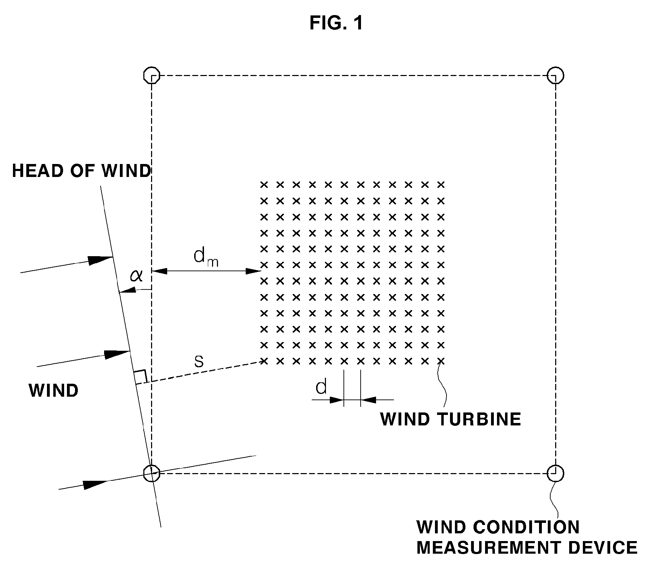

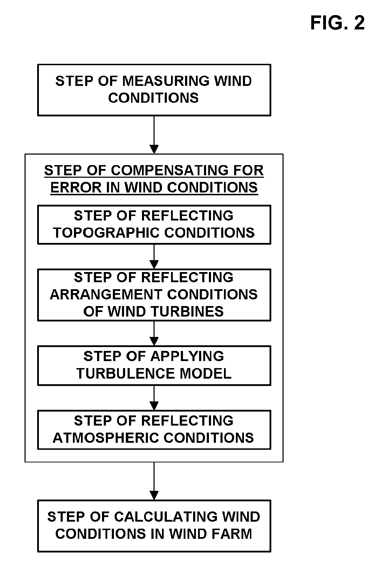

The above and other features and advantages of the present invention will become more apparent by describing in detail exemplary embodiments thereof with reference to the attached drawings in which: FIG. 1 is a diagram schematically showing a wind farm and wind condition measurement devices placed outside the wind farm; and FIG. 2 is a flowchart of a method for predicting wind conditions in a wind farm in accordance with an exemplary embodiment of the present invention.

DETAILED DESCRIPTION OF THE INVENTION

Hereinafter, the present invention will be described in detail with reference to the accompanying drawings.

FIG. 1 is a diagram schematically showing a wind farm and wind condition measurement devices placed outside the wind farm.

Although the wind turbines are simply placed in the form of a square in the wind farm in FIG. 1, the wind turbines may be placed in various forms depending on the topography in actual design of the wind farm, and it is more effective to design the wind farm to have a form that can maximize the power output of the wind farm.

The wind condition measurement devices are installed outside the wind farm. The installation positions of the wind condition measurement devices are determined based on a time required for the wind, of which conditions are measured by the wind condition measurement devices, to arrive at the wind farm and based on the level of errors that may occur on its way to the wind farm. The arrival time increases as the distance increases, and thus it is advantageous to control the power output by controlling the wind farm. However, the increased distance has more factors that cause errors in the wind conditions, which makes it difficult to accurately predict the wind conditions in the wind farm. On the contrary, when the wind condition measurement devices are placed close to the wind farm, it is possible to relatively accurately predict the wind conditions in the wind farm. However, the arrival time of the wind decreases, and thus it is necessary to control the wind farm within a short time. Accordingly, the wind condition measurement devices are placed in optimized positions within a distance range that can minimize the errors in the prediction of the wind conditions in the wind farm and, at the same time, can ensure the time required to control the wind farm.

FIG. 2 is a flowchart of a method for predicting wind conditions in a wind farm in accordance with an exemplary embodiment of the present invention.

In order to effectively operate a wind farm, it is important to accurately predict the direction and speed of wind blowing on wind turbines placed in the wind farm. When a wind condition measurement device is placed in the same position as the wind turbine, it is possible to obtain the most accurate wind condition information. However, in this case, it is only possible to measure in real time the wind conditions in the wind farm, but it is not possible to predict the wind conditions after a predetermined time, which makes it difficult to associate the wind conditions with the operation of the entire power grid. Accordingly, it is necessary to place the wind condition measurement devices at predetermined distances from the wind farm and predict the wind condition information in the wind farm after a predetermined time based on the measurement results of the wind condition measurement devices.

The method for predicting wind conditions in a wind farm in accordance with an exemplary embodiment of the present invention comprises the steps of (a) measuring wind conditions including a wind speed and a wind direction by means of wind condition measurement devices disposed outside the wind farm, (b) compensating for an error occurring while the wind conditions measured by the wind condition measurement devices are reaching the wind farm, and (c) calculating wind conditions in each wind turbine in the wind farm after a predetermined time based on the wind conditions whose error is compensated in step (b).

Step (b) comprises the steps of (b-1) compensating for the error based on topographic conditions between the wind condition measurement devices and the wind farm, and (b-2) compensating for the error based on conditions of a form in which the wind turbines are disposed in the wind farm.

The wind, of which conditions are measured by the wind condition measurement devices, may have errors caused by various factors while the wind is reaching the wind farm. In the present invention, the factors are generally classified into three factors to apply a method for compensating for an error due to each factor.

The first step of compensating for an error in wind conditions is based on topographic conditions between the wind condition measurement devices and the wind farm. The topographic conditions that result in a change in the wind conditions include properties, height, and form of the ground surface, and the properties of the ground surface depend on whether the ground surface is at sea or on land and, in the case of the ground surface on land, depend on whether the ground surface is flat or whether it is on snow, on grass, or in a copse. When the properties of the ground surface vary, the friction between the wind and the ground surface varies, and thus the properties of the ground surface affect the wind conditions. Meanwhile, although the wind blows on the same ground surface, the influence of the wind from the ground surface depends on the height, and thus the degree of change in the wind conditions varies depending on the height. The properties of the ground surface and the influence of the height can be represented by the following formula 1:

[Formula 1]

$$V_h = V_l \left( \frac{\ln \dfrac{h}{z_0}}{\ln \dfrac{l}{z_0}} \right) [m/s]$$

wherein h and l are the heights from the ground, $V_h$ and $V_l$ are the wind speeds at the corresponding heights, and $z_0$ is the coefficient of roughness.

For reference, the coefficient of roughness $z_0$ obtained from cumulative data is shown in the following table 1:

[Table 1]

| Surface roughness | Coefficient of roughness |
|---|---|
| On snow | 0.1 |
| Short grassland | 1 |
| Long grassland, barley field | 4 |
| Copse of 10 m in height | 50 |
| Suburban | 100 |
| Urban | 100 |
| Sea surface (depending on wave conditions) | 0.001 |

The form of the ground surface depends on whether the ground surface is bent or whether the ground surface is hilly or flat.

Meanwhile, the topographic conditions around the wind farm are not easily changed. That is, the properties, form, etc. of the wind farm are variables that rarely change. Accordingly, when an error due to a variable is reflected, it is advantageous to derive statistical data by accumulating the calculated topographic conditions and to perform a statistical application, instead of a real-time calculation. The properties of the ground surface differ slightly depending on the season, the growth of plants, the snow cover, etc. However, the properties of the ground surface have a repetitive pattern on a yearly basis, and thus it is easy to perform the statistical application. Moreover, the form of the ground surface around the wind farm hardly changes, and thus it is also easy to perform the statistical application. Accordingly, the exemplary embodiment of the present invention includes applying the statistical data as well as the real-time calculation to reflect the topographic conditions to the error in the wind conditions.

Meanwhile, the method for predicting wind conditions in a wind farm of the present invention comprises, after step (b-1), the step of (b-2) compensating for the error based on conditions of the form in which the wind turbines are disposed in the wind farm.

In step (b-2), the error in the wind conditions are compensated based on the influence exerted between the wind turbines in the wind farm as well as based on the change in the wind conditions occurring between the wind condition measurement devices and the wind farm. The influence exerted between the wind turbines differs depending on the form in which the wind turbines are disposed in the wind farm, and thus the influence is reflected in the compensation.

In the case where a plurality of wind turbines are installed in multiple layers in the wind farm as shown in FIG. 1, when a blade of the wind turbine, located in a layer where the wind arrives first, is rotated by the wind, the wind rotating the blade arrives at the next wind turbine with a change in the wind conditions. That is, even when the same wind blows on the wind farm, the speed and angle of the wind rotating each wind turbine vary depending on the position where the wind turbine is placed. Accordingly, it is possible to more accurately predict the wind conditions reaching each wind turbine of the wind farm by calculating the change of the wind operating the wind turbine based on the influence of a slipstream created by the blade of the wind turbine on other wind turbines.

The slipstream created by the rotation of the wind turbine increases the intensity of turbulence, increases the fatigue load due to a reduction in momentum of the wind turbines placed behind, and reduces the entire power output of the wind farm due to a reduction in the speed of the wind. Accordingly, the present invention predicts an inflow wind speed in the wind turbine affected by the slipstream and thus predicts the wind conditions in the wind turbine located in the position of the slipstream.

To predict the wind direction in the wind turbine affected by the slipstream, various standardized models may be used and, as an example, when an eddy viscosity model by Ainslie is used, it is written in the following formula 2:

[Formula 2]

$$U\frac{\partial U}{\partial x} + V\frac{\partial U}{\partial r} = \frac{\varepsilon}{r}\left(\frac{\partial U}{\partial r} + r\frac{\partial^2 U}{\partial r^2}\right)$$

wherein the rotation of the wind turbine is applied to a cylindrical coordinate system, r is the displacement in a radial direction of the cross section of the rotating blade of the wind turbine, x is the displacement in a direction that the wind flows in the wind turbine, V is the wind speed in the r direction, U is the wind speed in the x direction (the speed of wind causing power generation), and $\varepsilon$ is the coefficient indicating an eddy viscosity.

$\varepsilon$ (eddy viscosity) is calculated by the following formula 3:

[Formula 3]

$$\varepsilon = F\left(K_1 b\left(U_0 - U_c\right) + K_m\right)$$

wherein

$$K_m = \kappa^2 \frac{I_0}{100}$$

$$F = 1.0 \text{ for } x \geq 5.5$$

and

$$F = 0.65 + \left(\frac{x - 4.5}{23.32}\right)^{1/3} x < 5.5$$
,

where k is the Von Karman constant and $I_0$ is the turbulence intensity.

Accordingly, when the Ainslie model described in formula 2 and formula 3 is used, it is possible to predict the inflow wind speed in the wind turbine affected by the slipstream created by the rotation of the wind turbine and thus to predict the wind conditions in the wind turbine located in the position of the slipstream.

The method for predicting wind conditions in a wind farm in accordance with an exemplary embodiment of the present invention further comprises, after step (b-1), the step of (b-3) compensating for the error based on a turbulence model obtained by modeling the formation of turbulence due to the movement of wind.

In the present embodiment, the turbulence model is to compensate for an error due to turbulence when applying the topographic conditions.

The wind has an irregular flow due to various factors, which is referred to as turbulence, and the turbulence in the wind power generation is a factor causing a reduction in power generation and an increase in the system load. Accordingly, when the influence of the turbulence is reflected, it is possible to predict the wind conditions in the wind farm and thus to effectively control the wind farm, thereby stably operating the entire power grid.

To reflect the influence of the turbulence, it is necessary to calculate the turbulence intensity, an index indicative of the intensity of the turbulence. The turbulence intensity I is calculated by the following formula 4:

[Formula 4]

$$I = \frac{D^{1/2}}{V_m}$$

wherein $D^{1/2}$ is the standard deviation of the wind speed and $V_m$ is the average wind speed.

To obtain the turbulence intensity, information on the standard deviation of the wind speed and the average wind speed is required and may be obtained from the wind condition information whose error is compensated by the topographic conditions.

Based on the information on the wind speed obtained by applying the topographic conditions, the above formula 4 can be represented by the following formula 5:

[Formula 5]

$$I = \frac{1}{V_m} \left[ \frac{1}{T} \int_{t_0 - T/2}^{t_0 + T/2} (V(t) - V_m)^2 dt \right]^{1/2}$$

It is possible to determine the occurrence frequency of turbulences by calculating the turbulence intensity based on formula 5, and it is possible to predict the change in the wind conditions in the wind farm after a predetermined time based on the occurrence frequency of turbulences

Meanwhile, the method for predicting wind conditions in a wind farm in accordance with another exemplary embodiment of the present invention further comprises, after step (b-1), the step of (b-4) compensating for the error based on atmospheric conditions between the wind condition measurement devices and the wind farm.

The reflection of the atmospheric conditions between the wind condition measurement devices and the wind farm includes reflecting a change in wind conditions in the wind farm due to changes in temperature and atmospheric pressure between the wind condition measurement devices and the wind farm.

As an example of predicting the change in the wind conditions due to the changes in the temperature and atmospheric pressure, it is possible to calculate a change in air density due to the changes in the temperature and atmospheric pressure and to reflect the influence of the change in air density on the wind speed and wind direction.

The air density $\rho$ with respect to the temperature and atmospheric pressure can be calculated by the following formula 6:

[Formula 6]

$$\rho = \left( \frac{1.293}{(1 + 0.00367t)} \right) \left( \frac{P}{1013} \right) \left( 1 - \frac{0.78e}{P} \right)$$

wherein t is the temperature (°C), P is the atmospheric pressure, and e is the atmospheric vapor pressure.

Referring to formula 6, when the changes in the temperature and atmospheric pressure between the wind condition measurement devices and the wind farm are reflected, it is possible to accurately predict the air density. That is, since the movement of the wind is interrupted at a higher air density, the wind speed decreases in an area where the air density is high between the wind condition measurement devices and the wind farm, and the wind tends to blow toward an area where the air density is low, which also affects the wind direction.

Accordingly, when the wind conditions are predicted based on the atmospheric conditions, it is possible to more accurately predict the wind conditions, compared to that based on the topographic conditions, and it is advantageous to consider the influence of the changes in the temperature and atmospheric pressure.

Meanwhile, the wind condition measurement devices of the present invention may be disposed in multiple layers outside the wind farm. In this case, it is possible to predict the wind conditions changed in the wind farm by analyzing the change in the wind conditions measured by the wind condition measurement devices disposed in several layers outside the wind farm.

As such, the method for predicting wind conditions in a wind farm of the present invention predicts the wind conditions in the wind farm based on the factors that change the wind conditions between the wind condition measurement devices and the wind farm. In particular, the factors that affect the wind conditions are generally classified into three factors. First, the topographic conditions, which are the most main factor but have a low fluctuation over time, are mainly applied, and the slipstream, which has a significant effect on the change in the wind conditions, is applied to the compensation of the error among various factors that change the wind conditions in the wind farm. Moreover, the turbulence model reflecting the momentary change in the wind conditions and the atmospheric conditions affected by the temperature and atmospheric pressure are applied to increase the accuracy of the prediction of the wind conditions in each wind turbine in the wind farm.

According to the present invention, it is possible to consider all of the internal and external factors of the wind farm, and thus it is possible to accurately predict the wind conditions in each wind turbine in the wind farm after a predetermined time.

In particular, according to the present invention, it is possible to accurately predict the speed and direction of the wind that blows in the wind farm within several minutes to several hours, and thus it is possible to predict and control the amount of wind power generation within a very short time.

As described above, according to the present invention, it is possible to accurately predict the wind conditions of each wind turbine in the wind farm after a predetermined time.

Moreover, it is possible to stably operate the wind farm and further effectively operate the entire power grid associated with the wind farm by accurately predicting the wind conditions after a predetermined time to minimize the fluctuation in power output of the wind farm due to a change in the wind conditions.

Furthermore, it is possible to effectively control and operate the wind farm by predicting the power output of the wind farm, reducing the rate of fluctuation of the wind farm, and improving the power factor based on predicted wind condition information.

While the invention has been shown and described with reference to certain exemplary embodiments thereof, it will be understood by those skilled in the art that various changes in form and details may be made therein without departing from the scope of the invention as defined by the appended claims. Therefore, the scope of the invention is defined not by the detailed description of the invention but by the appended claims, and all differences within the scope will be construed as being included in the present invention.

**Claims**

1. A method for predicting wind conditions in a wind farm, the method comprising the steps of:

   (a) measuring wind conditions including a wind speed and a wind direction by means of wind condition measurement devices disposed outside the wind farm;
   (b) compensating for an error occurring while the wind conditions measured by the wind condition measurement devices are reaching the wind farm; and
   (c) calculating wind conditions in each wind turbine in the wind farm after a predetermined time based on the wind conditions whose error is compensated in step (b),

   wherein step (b) comprises the steps of:

   (b-1) compensating for the error based on topographic conditions between the wind condition measurement devices and the wind farm; and
   (b-2) compensating for the error based on conditions of a form in which the wind turbines are disposed in the wind farm and based on the influence of a slipstream created by a blade of one of the wind turbines on other wind turbines.

2. The method of claim 1, wherein step (b-1) performs a statistical application by accumulating the topographic conditions.

3. The method of claim 1 or claim 2, wherein step (b) further comprises, after step (b-1), the step of (b-3) compensating for the error based on a turbulence model obtained by modeling the formation of turbulence due to the movement of wind.

4. The method of any claim 1 to 3, wherein step (b) further comprises, after step (b-1), the step of (b-4) compensating for the error based on atmospheric conditions between the wind condition measurement devices and the wind farm.

5. The method of any one of claims 1 to 4, wherein the wind condition measurement devices are disposed in multiple layers outside the wind farm.

**Patentansprüche**

1. Verfahren zur Vorhersage von Windbedingungen in einem Windpark, wobei das Verfahren die Stufen umfasst:

(a) Messen der Windbedingungen, unter Einschluss einer Windgeschwindigkeit und einer Windrichtung anhand von Windbedingungsmessvorrichtungen, die außerhalb des Windparks angeordnet sind;
(b) Ausgleichen eines Fehlers, der auftritt, während die durch die Windbedingungsmessvorrichtungen gemessenen Windbedingungen den Windpark erreichen; und
(c) Berechnen der Windbedingungen in jeder Windturbine in dem Windpark nach einer vorbestimmten Zeit, basierend auf den Windbedingungen, deren Fehler in Stufe (b) ausgeglichen wird,

wobei Stufe (b) die Stufen umfasst:

(b-1) Ausgleichen des Fehlers basierend auf topographischen Bedingungen zwischen den Windmessvorrichtungen und dem Windpark; und
(b-2) Ausgleichen des Fehlers basierend auf Bedingungen einer Form, in der die Windturbinen in dem Windpark angeordnet sind und basierend auf dem Einfluss einer Wirbelzone, die durch einen Flügel einer der Windturbinen auf anderen Windturbinen hervorgerufen wird.

2. Verfahren gemäß Anspruch 1, bei dem Stufe (b-1) eine statistische Anwendung durch Kumulieren der topographischen Bedingungen durchführt.

3. Verfahren gemäß Anspruch 1 oder Anspruch 2, bei dem Stufe (b) nach Stufe (b-1) weiterhin die Stufe (b-3) umfasst, die den Fehler basierend auf einem Turbulenzmodell ausgleicht, das durch Modellbildung der Bildung der Turbulenz aufgrund der Windbewegung erhalten wird.

4. Verfahren gemäß Anspruch 1 bis 3, bei dem die Stufe (b) nach Stufe (b-1) weiterhin die Stufe (b-4) umfasst, die den Fehler basierend auf atmosphärischen Bedingungen zwischen den Windbedingungsmessvorrichtungen und dem Windpark ausgleicht.

5. Verfahren gemäß Anspruch 1 bis 4, bei dem die Windbedingungsmessvorrichtungen in multiplen Schichten außerhalb des Windparks angeordnet sind.

**Revendications**

1. Procédé de prédiction des conditions de vent dans un parc éolien, le procédé comprenant les étapes de :

(a) mesure de conditions de vent comprenant une vitesse de vent et une direction de vent au moyen de dispositifs de mesure de condition de vent disposés à l'extérieur du parc éolien ;
(b) compensation d'une erreur survenant alors que les conditions de vent mesurées par les dispositifs de mesure de condition de vent atteignent le parc éolien ; et
(c) calcul de conditions de vent dans chaque turbine éolienne dans le parc éolien après un temps prédéterminé sur la base des conditions de vent dont l'erreur est compensée à l'étape (b),

dans lequel l'étape (b) comprend les étapes de :

(b-1) compensation de l'erreur sur la base de conditions topographiques entre les dispositifs de mesure de condition de vent et le parc éolien ; et

(b-2) compensation de l'erreur sur la base de conditions d'une forme dans laquelle les turbines éoliennes sont disposées dans le parc éolien et sur la base de l'influence d'un souffle créé par une pale de l'une des turbines éoliennes sur d'autres turbines éoliennes.

2. Procédé selon la revendication 1, dans lequel l'étape (b-1) effectue une application statistique en cumulant les conditions topographiques.

3. Procédé selon la revendication 1 ou la revendication 2, dans lequel l'étape (b) comprend en outre, après l'étape (b-1), l'étape de (b-3) compensant l'erreur sur la base d'un modèle de turbulence obtenu en modelant la formation de turbulence due au déplacement du vent.

4. Procédé selon l'une quelconque des revendications 1 à 3, dans lequel l'étape (b) comprend en outre, après l'étape (b-1), l'étape de (b-4) compensant l'erreur sur la base de conditions atmosphériques entre les dispositifs de mesure de condition de vent et le parc éolien.

5. Procédé selon l'une quelconque des revendications 1 à 4, dans lequel les dispositifs de mesure de condition de vent sont disposés dans de multiples couches à l'extérieur du parc éolien.

**FIG. 1**

HEAD OF WIND

$\alpha$

$d_m$

s

WIND

d

WIND TURBINE

WIND CONDITION
MEASUREMENT DEVICE

FIG. 2

```
┌─────────────────────────────────┐
│   STEP OF MEASURING WIND        │
│        CONDITIONS               │
└─────────────────────────────────┘
                │
                ▼
┌───────────────────────────────────────┐
│  STEP OF COMPENSATING FOR             │
│  ERROR IN WIND CONDITIONS             │
│  ┌─────────────────────────────────┐  │
│  │   STEP OF REFLECTING            │  │
│  │  TOPOGRAPHIC CONDITIONS         │  │
│  └─────────────────────────────────┘  │
│                 │                      │
│                 ▼                      │
│  ┌─────────────────────────────────┐  │
│  │   STEP OF REFLECTING            │  │
│  │  ARRANGEMENT CONDITIONS         │  │
│  │    OF WIND TURBINES             │  │
│  └─────────────────────────────────┘  │
│                 │                      │
│                 ▼                      │
│  ┌─────────────────────────────────┐  │
│  │   STEP OF APPLYING              │  │
│  │   TURBULENCE MODEL              │  │
│  └─────────────────────────────────┘  │
│                 │                      │
│                 ▼                      │
│  ┌─────────────────────────────────┐  │
│  │   STEP OF REFLECTING            │  │
│  │  ATMOSPHERIC CONDITIONS         │  │
│  └─────────────────────────────────┘  │
└───────────────────────────────────────┘
                │
                ▼
┌─────────────────────────────────┐
│   STEP OF CALCULATING WIND      │
│   CONDITIONS IN WIND FARM       │
└─────────────────────────────────┘
```

**EP 2 637 046 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101093003
- JP 2009138523 A